# EUROPÄISCHE PATENTSCHRIFT

(11) **EP 3 910 570 B1**
(45) Veröffentlichungstag und Bekanntmachung des Hinweises auf die Patenterteilung: **06.12.2023**
(21) Anmeldenummer: 20174938.9
(22) Anmeldetag: 15.05.2020
(51) Int. Cl.: G06Q 10/0633, G06Q 50/08

(54) **VERFAHREN ZUR BAUSTELLENÜBERWACHUNG UND SYSTEM HIERZU**
METHOD FOR CONSTRUCTION SITE MONITORING AND SYSTEM FOR SAME
PROCÉDÉ ET SYSTÈME DE SURVEILLANCE D'UN CHANTIER ET SYSTÈME ASSOCIÉ

(43) Veröffentlichungstag der Anmeldung: 17.11.2021
(73) Patentinhaber: BAUER Maschinen GmbH, 86529 Schrobenhausen (DE)
(72) Erfinder: REGLER, Hans, 86529 Schrobenhausen (DE); MAURER, Jochen, 81825 München (DE)
(74) Vertreter: Wunderlich & Heim Patentanwälte Partnerschaftsgesellschaft mbB

(56) Entgegenhaltungen:
- WO-A1-2017/164794

## Beschreibung

Die Erfindung betrifft ein Verfahren zum Überwachen einer Baustelle sowie ein System zum Überwachen einer Baustelle.

Bei Großbauprojekten wird eine Vielzahl von Baugeräten und zum Teil auch Sensoren auf einer Baustelle eingesetzt. Das Koordinieren der verwendeten Geräte auf einer Baustelle ist nicht einfach und wird mit zunehmender Größe der Baustellen immer unübersichtlicher und komplexer.

Zur Vereinfachung des Koordinierens sind verschiedene Bauverfahren bekannt. Beispielsweise ist in der EP 3 533 934 A1 ein Bauverfahren beschrieben, bei dem in einer Baugrube an vorgegebenen Arbeitspunkten mittels Arbeitsgeräten Gründungselemente erstellt werden. Hierbei wird über eine Rechnereinheit eine Überwachung durchgeführt, so dass der Simultanbetrieb mehrerer Arbeitsgeräte möglich ist, wobei insbesondere auf die notwendigen Freiflächen geachtet wird.

Die WO 2017/164794 offenbart ein Verfahren zum Überwachen einer Baustelle (siehe die Zusammenfassung), wobei auf der Baustelle ("construction site") mehrere Geräte ("construction devices") eingesetzt werden (siehe zweiter Absatz auf Seite 4), wobei an jedem Gerät jeweils mindestens ein Sensor ("sensors") vorgesehen wird (siehe letzter Absatz auf Seite 4 und die drei ersten Absätze auf Seite 5), wobei eine Geräteliste pro zu überwachender Baustelle erstellt wird (siehe zweiter Absatz auf Seite 7), wobei die Geräteliste vor dem Beginn der Bauarbeiten erstellt wird (implizit Offenbarung im zweiten Absatz auf Seite 7), wobei der Geräteliste der Baustelle die mehreren Geräte zugeordnet werden, welche auf der jeweiligen zu überwachenden Baustelle eingesetzt werden (siehe zweiter Absatz auf Seite 7), wobei pro Gerät der Geräteliste zugeordnet wird, welche der am Gerät vorgesehenen Sensoren der Geräteliste zugeordnet werden (siehe zweiter Absatz auf Seite 7 und Figur 4), wobei zum Erhalten der Daten der Sensoren der Geräte der Geräteliste eine direkte oder indirekte Kommunikationsverbindung ("network") mit den Sensoren der Geräte der Geräteliste aufgebaut wird (siehe zweiter Absatz auf Seite 4) und wobei die erhaltenen Daten der Sensoren der Geräte der Geräteliste in einem spezifischen, gemeinsamen Speicherort ("memory") abgelegt werden (siehe letzter Absatz auf Seite 10), wobei entschieden wird, in welchem spezifischen, gemeinsamen Speicherort die entsprechenden Daten der Sensoren abgespeichert werden (siehe letzter Absatz auf Seite 10).

Der Erfindung liegt die **Aufgabe** zugrunde, ein Verfahren und ein System anzugeben, welche einfach und effizient das Überwachen einer Baustelle ermöglichen. Diese Aufgabe wird erfindungsgemäß durch ein Verfahren mit den Merkmalen des Anspruchs 1 sowie ein System mit den Merkmalen des Anspruchs 9 gelöst.

Vorteilehafte Ausführungsformen der Erfindung sind in den Unteransprüchen, in der Beschreibung sowie in den Figuren und deren Erläuterungen angegeben.

Entsprechend der Erfindung ist vorgesehen, dass bei dem erfindungsgemäßen Verfahren auf einer Baustelle mehrere Geräte eingesetzt werden, wobei an jedem Gerät jeweils mindestens ein Sensor vorgesehen beziehungsweise angebracht wird. Es wird eine Geräteliste pro zu überwachender Baustelle erstellt, wobei der Geräteliste der Baustelle die mehreren Geräte zugeordnet werden, welche auf der jeweiligen zu überwachenden Baustelle eingesetzt werden. Hierbei wird pro Gerät der Geräteliste zugeordnet, welche der am Gerät vorhandenen Sensoren der Geräteliste zugeordnet werden. Zum Erhalt der Daten der Sensoren der Geräte der Geräteliste wird eine direkte oder indirekt Kommunikationsverbindung mit den Sensoren der Geräte der Geräteliste aufgebaut. Diese so erhaltenen Daten der Sensoren der Geräte der Geräteliste werden in einem spezifischen, gemeinsamen Speicherort abgelegt. Auch ist es möglich aus den erhaltenen Daten weiter Informationen zu errechnen und/oder Stati zu ermitteln. Auch diese können dann im spezifischen, gemeinsamen Speicherort abgelegt werden.

Ein Grundgedanke der Erfindung kann darin gesehen werden, für jede zu überwachende Baustelle eine dezidierte Geräteliste anzulegen und zu verwalten, auf der direkt oder indirekt vermerk ist, welche Geräte mit welchen Sensoren auf der Baustelle vorhanden sind und Daten liefern können. Mittels des Inhaltes dieser Geräteliste ist es somit möglich, Daten, welche von Sensoren geliefert werden, explizit einer Baustelle eindeutig zuzuordnen und somit die Überwachung dieser Baustelle zu optimieren. Dies ist insbesondere dann sinnvoll, wenn parallel mehrere Baustellen überwacht werden sollen. Durch das Anlegen von einer Gerätelist für jede Baustelle, in der zu den eingesetzten Geräte die Sensoren vermerkt sind, die Daten liefern sollen, kann eine Großzahl von Sensoren auf verschiedenen Baustellen gleichzeitig verwaltet und überwacht werden, ohne dass ein erhöhter Aufwand zur einzelnen Zuordnung der Daten der einzelnen Sensoren zu einzelnen Baustellen notwendig ist.

Ferner ist vorgesehen, dass nicht jeder Sensor, der an einem Gerät der Geräteliste vorgesehen ist, der Geräteliste zugeordnet wird. Werden auf einer Baustelle Bohrgeräte verwendet, die eine Vielzahl von Sensoren haben, so ist es beispielsweise für das Überwachen der Baustelle nicht relevant, wie der aktuelle Ölstand des Bohrgerätes oder anderer Wartungsinformationen zurzeit sind. Diese Daten können so von der Überwachung der Baustelle ausgeschlossen werden. Andererseits können Informationen, also Daten, über die Vortriebsgeschwindigkeit beim Bohren oder dergleichen sehr wohl relevant sein und so diesbezügliche Sensoren der Baustelle zugeordnet werden, um in Zusammenhang mit Daten anderer Sensoren Informationen beispielsweise über die Bodenbeschaffenheit ermitteln zu können.

Hierbei kann jeder Sensor direkt zugeordnet werden. Es können aber auch Konstellationen, in denen das Zuordnen indirekter geschieht, mittels dem erfindungsgemäßen Verfahren berücksichtigt werden. Beispielsweise ist es möglich, dass ein Gerät, zum Beispiel ein Baugerät, die Daten seiner Sensoren als Daten der Kanäle eins bis drei zur Verfügung stellt. In diesem Fall ist es notwendig zu wissen, dass der bestimmt Typ Baugerät auf Kanal eins Daten zur Tiefe einer Bohrung, auf Kanal zwei Daten zur benötigten Kraft und auf Kanal drei Daten zum Füllstand des Tankes liefert. Diese Daten können sogar dimensionslos und/oder reine Daten eines Sensors sein, zum Beispiel ein Spannungswert. Im Zusammenhang mit der Information welcher Baugerätetyp verwendet wird, kann so unter Berücksichtigung der Kanalnummer die entsprechende physikalische Größe ermittelt werden. Auch in diesem Fall können so die Daten eines Sensors über den entsprechenden Kanal zugeordnet werden.

Entsprechend der Erfindung werden die Daten der Sensoren der Geräte der Geräteliste über eine direkte oder indirekte Kommunikationsverbindung zu den Sensoren der Geräte der Geräteliste erhalten. Zum einen kann eine direkte Kommunikationsverbindung mit einem Sensor beziehungsweise zu dem entsprechenden Gerät aufgebaut werden, beispielsweise sofern dieser oder dieses zur Kommunikation mittels einer direkten Funkverbindung ausgebildet ist. Ebenfalls ist es aber auch möglich, eine indirekte Verbindung aufzubauen, beispielsweise über zwischengeschaltete Datensammelstellen, bei denen es sich um Datenbanken in einer Cloud handeln kann, aber auch um lokale Datensammelstellen auf einer Baustelle.

Abschließend werden die erhaltenen Daten der Sensoren der Geräte der Geräteliste in einem spezifischen, gemeinsamen Speicherort abgelegt. Hierdurch wird erreicht, dass eine eindeutige Zuordnung der Daten der Sensoren einer Geräteliste zu einer Baustelle möglich ist. Dies erleichtert wiederum eine anschließende Auswertung sowie die gesamte Datenhaltung, so dass weniger Ressourcen hierfür eingesetzt werden müssen.

Vorteilhafterweise wird der Geräteliste einer Baustelle des Weiteren ein Arbeitszeitraum zugeordnet. Im Sinne der Erfindung kann unter Arbeitszeit insbesondere der Zeitraum verstanden werden, in dem projektiert ist, dass auf einer Baustelle Arbeiten stattfinden. Dieser zusätzliche in der Geräteliste definierte Zeitraum ermöglicht es sicherzustellen, dass nur solche Daten eines Sensors in dem spezifischen, gemeinsamen Speicherort abgelegt werden, die auch von der entsprechenden Baustelle stammen. Wird beispielsweise ein Baugerät von einer ersten Baustelle auf eine zweite verfahren, so kann unabhängig ob für die zweite Baustelle ebenfalls eine Geräteliste vorliegt, bereits mittels des Arbeitszeitraums festgestellt werden, dass die Sensoren nicht mehr zu der überwachten Baustelle gehören.

Diesbezüglich kann es ferner vorgesehen sein, dass die Zuordnung der Sensoren eines Gerätes zu der Geräteliste mittels Positionsinformationen, insbesondere automatisiert durchgeführt wird. Es ist beispielsweise möglich, wenn die Sensoren an einem Baugerät vorgesehen sind, dass dieses Baugerät zusätzlich Positionsinformationen, beispielsweise durch einen GPS-Sensor, empfängt. Ist im Rahmen der Geräteliste beispielsweise die genaue Position beziehungsweise die Abmaße und der Position einer Baustelle festgelegt, so kann das Gerät und seine Sensoren beispielsweise automatisiert der entsprechenden Geräteliste hinzugefügt werden, sobald entsprechende Positionsinformationen vorliegen, die darauf schließen lassen, dass sich das Gerät auf der Baustelle befindet. Auch ist es denkbar, dass auf einer Baustelle eine elektronische Registrierung vorhanden ist, an der sich ein ankommendes Baugerät anmeldet.

Grundsätzlich kann die Geräteliste zu einem beliebigen Zeitpunkt erstellt werden. Vorteilhaft ist es jedoch, wenn diese vor Beginn der Bauarbeiten erstellt wird. Auf diese Art und Weise kann sichergestellt werden, dass alle Daten der Sensoren, welche sich an Geräten, die auf der Baustelle eingesetzt werden, befinden, sicher in dem spezifischen, gemeinsamen Speicher abgelegt werden. Auch hierdurch wird wiederum die Datenhaltung deutlich erleichtert und somit Ressourcen schonender.

Grundsätzlich sind verschiedene Möglichkeiten vorhanden, um Daten von den Sensoren der Geräte der Geräteliste zu erhalten. Beispielsweise ist es möglich, dass die Sensoren der Geräte der Geräteliste ihre Daten aktiv an eine Rechen- oder Auswerteeinheit versenden, welche die Daten der Sensoren der Geräte einer Geräteliste zuordnet und dafür sorgt, dass sie in dem spezifischen, gemeinsamen Speicherbereich abgespeichert werden. Das Zusenden kann hierbei indirekt oder direkt erfolgen, beispielsweise über vermittelnde Stellen oder auch direkt mittels einer örtlichen Verbindung. Auch Funkverbindungen sind hierfür grundsätzlich geeignet.

Eine andere Möglichkeit ist, dass die Daten der Sensoren der Geräte der Geräteliste von den Sensoren und/oder einer Datenbank, in der diese Daten vorhanden sind, aktiv abgerufen werden. Dies ist beispielsweise dann möglich, wenn die Daten der Sensoren zusätzlich in herstellerspezifischen Datenbanken abgelegt werden. Somit können die Daten der Sensoren zu einem beliebigen Zeitpunkt abgefragt werden, der im Rahmen des Verfahrens festgelegt werden kann. Grundsätzlich kann aber auch eine Kombination beider Arten des Beschaffens der Daten der Sensoren vorliegen.

Bevorzugt ist es, wenn als Geräte Baugeräte und/oder Sensoreinrichtungen eingesetzt werden. Bei einem Baugerät kann es sich beispielsweise um eine Schlitzwandfräse oder eine Ramme handeln. Als Sensoreinrichtung können zum Beispiel Messdosen verwendet werden, die an Erdankern angebracht sind, um so die entstehenden Kräfte zu überwachen.

Besonders vorteilhaft ist es, wenn mehrere Gerätelisten für mehrere Baustellen erstellt werden und simultan verwendet werden, wobei jeweils Geräteliste pro Baustelle verwendet wird. Gerade in einer derartigen Konstellation zeigt sich der größte Vorteil des Verfahrens gemäß der Erfindung, da insbesondere die Überwachung von vielen Baustellen gleichzeitig durch das explizite Zuordnen von Sensoren zu einer Geräteliste, die mit einer Baustelle korrespondiert, die Überwachung deutlich vereinfacht.

Es kann des Weiteren vorgesehen sein, dass mittels des Löschens einer Geräteliste und/oder des spezifischen, gemeinsamen Speicherortes die Daten zu einer Baustelle gelöscht werden. Auf diese Art wird sichergestellt, dass nach dem Löschen die Daten der Sensoren einer Baustelle, nicht mehr an einer anderen Stelle zur Verfügung stehen, da die Daten ausschließlich in dem spezifischen, gemeinsamen Speicherorte abgespeichert wurden. Dies erleichtert den immer wichtiger werden Datenschutz.

Des Weiteren betrifft die Erfindung ein System zum Überwachen einer Baustelle mit mehreren Geräten, welche auf der Baustelle eingesetzt sind. Hierbei ist an jedem Gerät jeweils mindestens ein Sensor vorgesehen. Das System weist eine Auswerteeinrichtung auf, in der eine Geräteliste pro zu überwachender Baustelle eingerichtet ist, wobei der Geräteliste der Baustelle die mehreren Geräte zugeordnet sind, welche auf der jeweiligen zu überwachenden Baustelle eingesetzt sind. Hierbei ist in der Geräteliste pro Gerät vermerkt, welche der am Gerät vorhandenen Sensoren in der Geräteliste aufgenommen sind. Die Auswerteeinrichtung baut eine direkte oder indirekte Kommunikationsverbindung mit den Sensoren der Geräte der Gerätelist auf, um Daten der Sensoren zu erhalten und anschließend die erhaltenen Daten der Sensoren der Geräte der Geräteliste in einem spezifischen, gemeinsamen Speicherort abzulegen.

Mit dem erfindungsgemäßen System ist es somit möglich, das zuvor beschriebene Verfahren auszuführen. Das System kann zum Beispiel als Auswerteeinrichtung einen Server aufweisen, welcher mittels entsprechenden Kommunikationsschnittstellen über ein Netzwerk, beispielsweise dem Internet, die Daten der Sensoren aktiv oder passiv abfragt.

Die Erfindung wird nachfolgend anhand eines schematischen Ausführungsbeispiels unter Bezugnahme auf die Figur näher erläutert. Hierbei zeigt:

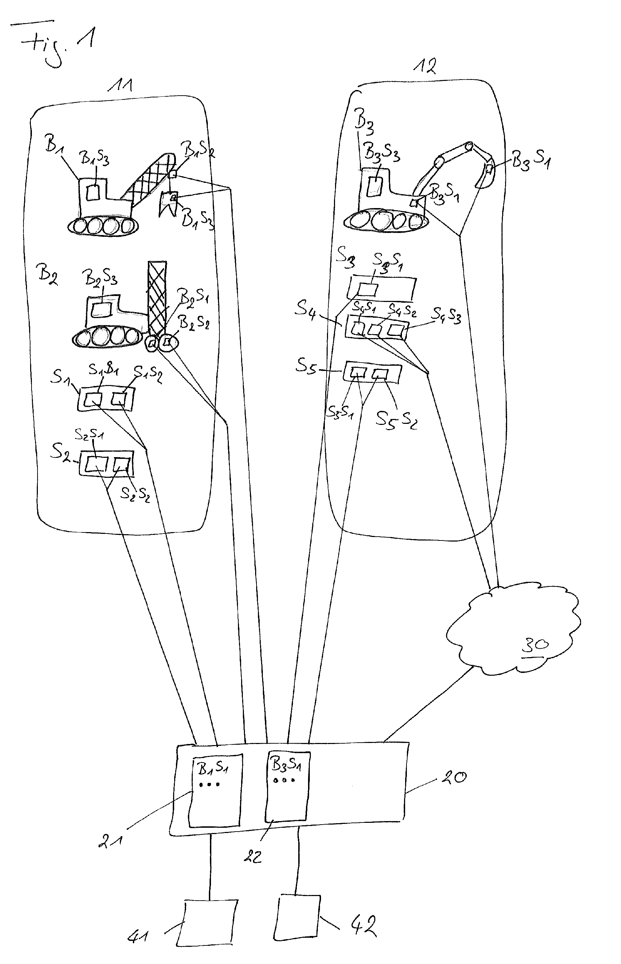

- Fig. 1: eine Skizze zur Verdeutlichung des erfindungsgemäßen Verfahrens.

In Fig. 1 ist schematisiert eine erste Baustelle 11 sowie eine zweite Baustelle 12 dargestellt.

Auf der ersten Baustelle 11 wird ein Baugeräte B₁ sowie ein zweites Baugerät B₂ verwendet. Jedes dieser Baugeräte B₁, B₂ weist drei Sensoren B₁S₁, B₁S₂, B₁S₃, B₂S₁, B₂S₂, B₂S₃ auf. Hierbei liefern die Sensoren B₁S₃ und B₂S₃ beispielsweise Daten über die Laufzeit des Hauptmotors nach der letzten Wartung. Demgegenüber liefern die Sensoren B₁S₁, B₁S₂, B₂S₁, B₂S₂ beispielsweise Daten über Drehzahlen einer Welle oder Daten, welche Rückschlüsse auf den Kraftaufwand beim Abtragen des Bodens liefern können.

Zusätzlich sind auf der Baustelle 11 zwei Sensoreinrichtungen S₁ und S₂ vorgesehen, welche jeweils zwei Sensoren S₁S₁, S₁S₂, S₂S₁, S₂S₂ besitzen. Hierbei kann es sich beispielsweise um Temperatursensoren, seismische Sensoren oder auch um Kraftmessdosen handeln.

In ähnlicher Weise sind auf der Baustelle 12 wiederum ein Baugerät B₃ mit drei Sensoren B₃S₁, B₃S₂ und B₃S₃ sowie drei Sensoreinrichtungen S₃, S₄ und S₅ vorhanden. Jede dieser Sensoreinrichtungen weist in diesem Fall ein bis drei einzelne Sensoren S₃S₁, S₄S₁, S₄S₂, S₄S₃, S₅S₁, S₅S₂ auf.

Im unteren Bereich der Fig. 1 ist eine Auswerteeinrichtung 20 dargestellt, auf der zwei Gerätelisten 21, 22 eingerichtet sind.

Auf der Geräteliste 21 sind die Sensoren B₁S₁, B₁S₂, B₂S₁, B₂S₂, S₁S₁, S₁S₂, S₂S₁, S₂S₂ eingetragen. Auf der zweiten Geräteliste 22 sind wiederum die Sensoren B₃S₁, B₃S₂, S₃S₁, S₄S₁, S₄S₂, S₄S₃, S₅S₁, S₅S₂ vermerkt. Die Sensoren B₁S₃, B₂S₃ und B₃S₃ befinden sich auf keiner der Gerätelisten 21, 22.

Nun kann die Auswerteeinrichtung 20 beispielsweise über eine Cloud 30 Daten der Sensoren der Sensoreinrichtung S₄, und des Baugerätes B₃ abfragen. In ähnlicher Weise ist eine direkte Abfrage der Sensoren des Baugerätes B₁ oder B₂ möglich. Es ist allerdings auch möglich, dass die Sensoren, beispielsweise der Sensor S₁S₁ selbständig seine Daten an die Auswerteeinrichtung 20 sendet.

In der Auswerteeinrichtung 20 wird anhand der Gerätelisten 21, 22 entschieden, in welchem spezifischen, gemeinsamen Speicher 41, 42 die entsprechenden Daten der Sensoren B₁S₁, B₁S₂, B₂S₁, B₂S₂, B₃S₁, B₃S₂, S₁S₁, S₁S₂, S₂S₁, S₂S₂, S₃S₁, S₄S₁, S₄S₂, S₄S₃, S₅S₁, S₅S₂ abgespeichert werden sollen. Daten des Sensors B₁S₃ würden, da er in keiner der Gerätelisten 21, 22 vermerkt ist, auch nicht in einem spezifischen, gemeinsamen Speicher 41, 42 abgelegt, selbst wenn der Sensor B₁S₃ diese an die Auswerteeinrichtung 20 senden würde.

Somit ist es mit der Erfindung möglich, Daten von verschiedenen Baustellen gezielt zu überwachen und gleichzeitig die hierfür notwendig Überwachungsstruktur zu vereinfachen.

## Patentansprüche

1. Verfahren zum Überwachen mehrerer Baustellen (11, 12),
wobei auf jeder Baustelle (11, 12) mehrere Geräte (B₁, B₂, B₃, S₁, S₂, S₃, S₄, S₄) eingesetzt werden,
wobei an jedem Gerät (B₁, B₂, B₃, S₁, S₂, S₃, S₄, S₄) jeweils mindestens ein Sensor (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) vorgesehen wird,
wobei eine Geräteliste (21, 22) pro zu überwachender Baustelle (11, 12) erstellt wird, sodass mehrere Gerätelisten (21, 22) für mehrere Baustellen (11, 12) zeitgleich erstellt werden,
wobei die Gerätelisten (21, 22) vor dem Beginn der Bauarbeiten erstellt werden,
wobei der Geräteliste (21, 22) der Baustelle (11, 12) die mehreren Geräte (B₁, B₂, B₃, S₁, S₂, S₃, S₄, S₄) zugeordnet werden, welche auf der jeweiligen zu überwachenden Baustelle (11, 12) eingesetzt werden,
wobei pro Gerät (B₁, B₂, B₃, S₁, S₂, S₃, S₄, S₄) der Geräteliste (21, 22) zugeordnet wird, welche der am Gerät vorgesehenen Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) der Geräteliste (21, 22) zugeordnet werden,
wobei nicht jeder Sensor (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂), der an einem Gerät (B₁, B₂, B₃, S₁, S₂, S₃, S₄, S₄) der Geräteliste (21, 22) vorgesehen ist, der Geräteliste (21, 22) zugeordnet wird, wobei Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂), die an einem Gerät (B₁, B₂, B₃, S₁, S₂, S₃, S₄, S₄) der Geräteliste (21, 22) vorgesehen sind, die für das Überwachen der Baustelle nicht relevant sind, der Geräteliste (21, 22) nicht zugeordnet werden,
wobei zum Erhalten der Daten der Sensoren der Geräte (B₁, B₂, B₃, S₁, S₂, S₃, S₄, S₄) der Geräteliste (21, 22) eine direkte oder indirekte Kommunikationsverbindung mit den Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) der Geräte (B₁, B₂, B₃, S₁, S₂, S₃, S₄, S₄) der Geräteliste (21, 22) aufgebaut wird und
wobei die erhaltenen Daten der Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) der Geräte (B₁, B₂, B₃, S₁, S₂, S₃, S₄, S₄) der Geräteliste (21, 22) je in einem spezifischen, gemeinsamen Speicherort (41, 42) abgelegt werden,
wobei anhand der Gerätelisten (21, 22) entschieden wird, in welchem spezifischen, gemeinsamen Speicherort (41, 42) die entsprechenden Daten der Sensoren (B₁S₁, B₁S₂, B₂S₁, B₂S₂, B₃S₁, B₃S₂, S₁S₁, S₁S₂, S₂S₁, S₂S₂, S₃S₁, S₄S₁, S₄S₂, S₄S₃, S₅S₁, S₅S₂) abgespeichert werden, und
wobei der Geräteliste (21, 22) einer Baustelle (11, 12) ein Arbeitszeitraum zugeordnet wird.

2. Verfahren nach Anspruch 1,
**dadurch gekennzeichnet ,**
**dass** die Zuordnung der Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) eines Geräts (B₁, B₂, B₃, S₁, S₂, S₃, S₄, S₄) zu der Geräteliste (21, 22) mittels Positionsinformationen, insbesondere automatisiert, durchgeführt wird.

3. Verfahren nach Anspruch 1 oder 2,
**dadurch gekennzeichnet ,**
**dass** eine eindeutige Zuordnung zwischen Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) eines Gerätes (B₁, B₂, B₃, S₁, S₂, S₃, S₄, S₄) und einer Baustelle (11, 12) mittels der Gerätliste (21, 22) erfolgt.

4. Verfahren nach einem der Ansprüche 1 bis 3,
**dadurch gekennzeichnet ,**
**dass** Daten der Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) der Geräte (B₁, B₂, B₃, S₁, S₂, S₃, S₄, S₄) der Geräteliste (21, 22) von den Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) und/oder einer Datenbank, in der diese Daten vorhanden sind, abgerufen werden.

5. Verfahren nach einem der Ansprüche 1 bis 4,
**dadurch gekennzeichnet ,**
**dass** die Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) der Geräte (B₁, B₂, B₃, S₁, S₂, S₃, S₄, S₄) der Geräteliste (21, 22) ihre Daten an eine Recheneinheit senden, welche die Daten der Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) der Geräte (B₁, B₂, B₃, S₁, S₂, S₃, S₄, S₄) der Geräteliste (21, 22) zuordnet.

6. Verfahren nach einem der Ansprüche 1 bis 5,
**dadurch gekennzeichnet ,**
**dass** als Geräte (B₁, B₂, B₃, S₁, S₂, S₃, S₄, S₄) Baugeräte (B₁, B₂, B₃) eingesetzt werden.

7. Verfahren nach einem der Ansprüche 1 bis 6,
**dadurch gekennzeichnet,**
**dass** als Geräte (B₁, B₂, B₃, S₁, S₂, S₃, S₄, S₄) Sensoreinrichtungen (S₁, S₂, S₃, S₄, S₅) eingesetzt werden.

8. Verfahren nach einem der Ansprüche 1 bis 7,
**dadurch gekennzeichnet,**
**dass** mittels des Löschens einer Geräteliste (21, 22) und/oder des spezifischen, gemeinsamen Speicherortes (41, 42) die Daten zur einer Baustelle (11, 12) gelöscht werden.

9. System zum Überwachen mehrerer Baustellen (11, 12) mit jeweils mehreren Geräten (B₁, B₂, B₃, S₁, S₂, S₃, S₄, S₄), welche auf den mehreren der Baustellen (11, 12) eingesetzt werden,
wobei an jedem Gerät (B₁, B₂, B₃, S₁, S₂, S₃, S₄, S₄) jeweils mindestens ein Sensor (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) vorgesehen ist,
mit einer Auswerteeinrichtung (20), in der eine Geräteliste (21, 22) pro zu überwachender Baustelle (11, 12) eingerichtet ist,
wobei in der Geräteliste (21, 22) der Baustelle (11, 12) die mehreren Geräte (B₁, B₂, B₃, S₁, S₂, S₃, S₄, S₄) zugeordnet sind, welche auf der jeweiligen zu überwachenden Baustelle (11, 12) eingesetzt sind, sodass mehrere Gerätelisten (21, 22) für mehrere Baustellen (11, 12) zeitgleich eingerichtet sind,
wobei die Gerätelisten (21, 22) vor dem Beginn der Bauarbeiten erstellt sind, wobei in der Geräteliste (21, 22) pro Gerät (B₁, B₂, B₃, S₁, S₂, S₃, S₄, S₄) zugeordnet ist, welche der am Gerät (B₁, B₂, B₃, S₁, S₂, S₃, S₄, S₄) vorhandenen Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) der Geräteliste (21, 22) zugeordnet sind,
wobei nicht jeder Sensor (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂), der an einem Gerät (B₁, B₂, B₃, S₁, S₂, S₃, S₄, S₄) der Geräteliste (21, 22) vorgesehen ist, der Geräteliste (21, 22) zugeordnet ist, wobei Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂), die an einem Gerät (B₁, B₂, B₃, S₁, S₂, S₃, S₄, S₄) der Geräteliste (21, 22) vorgesehen sind, die für das Überwachen der Baustelle nicht relevant sind, der Geräteliste (21, 22) nicht zugeordnent sind,
wobei die Auswerteeinrichtung (20) eine direkte oder indirekte Kommunikationsverbindung mit den Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) der Geräte (B₁, B₂, B₃, S₁, S₂, S₃, S₄, S₄) der Geräteliste (21, 22) aufbaut, um Daten der Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) zu erhalten und
wobei die Auswerteeinrichtung (20) die erhaltenen Daten der Sensoren (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) der Geräte (B₁, B₂, B₃, S₁, S₂, S₃, S₄, S₄) der Geräteliste (21, 22) in je einem spezifischen, gemeinsamen Speicherort (41, 42) ablegt,
wobei die Auswerteeinrichtung (20) anhand der Gerätelisten (21, 22) entscheidet, in welchem spezifischen, gemeinsamen Speicherort (41, 42) die entsprechenden Daten der Sensoren (B₁S₁, B₁S₂, B₂S₁, B₂S₂, B₃S₁, B₃S₂, S₁S₁, S₁S₂, S₂S₁, S₂S₂, S₃S₁, S₄S₁, S₄S₂, S₄S₃, S₅S₁, S₅S₂) abgespeichert werden, und
wobei der Geräteliste (21, 22) einer Baustelle (11, 12) ein Arbeitszeitraum zugeordnet ist.

## Claims

1. Method for monitoring several construction sites (11, 12),
wherein several devices (B₁, B₂, B₃, S₁, S₂, S₃, S₄, S₅) are used on each construction site (11, 12),
wherein on each device (B₁, B₂, B₃, S₁, S₂, S₃, S₄, S₅) at least one sensor (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) is provided in each case,
wherein a device list (21, 22) is created for each construction site (11, 12) to be monitored so that several device lists (21, 22) are simultaneously created for several construction sites (11, 12),
wherein the device lists (21, 22) are created before the beginning of the construction works,
wherein the several devices (B₁, B₂, B₃, S₁, S₂, S₃, S₄, S₅) that are used on the respective construction site (11, 12) to be monitored are assigned to the device list (21, 22) of the construction site (11, 12),
wherein for each device (B₁, B₂, B₃, S₁, S₂, S₃, S₄, S₅) of the device list (21, 22) assignment is made as to which of the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) provided on the device are assigned to the device list (21, 22),
wherein not every sensor (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) provided on a device (B₁, B₂, B₃, S₁, S₂, S₃, S₄, S₅) of the device list (21, 22) is assigned to the device list (21, 22), wherein sensors (B1S1, B1S2, B1S3, B2S1, B2S2, B2S3, B3S1, B3S2, B3S3, S1S1, S1S2, S2S1, S2S2, S3S1, S4S1, S4S2, S4S3, S5S1, S5S2) provided on a device (B1, B2, B3, S1, S2, S3, S4, S5) of the device list (21, 22), which are not relevant for monitoring the construction site, are not assigned to the device list (21, 22),
wherein for the purpose of obtaining the data from the sensors of the devices (B₁, B₂, B₃, S₁, S₂, S₃, S₄, S₅) of the device list (21, 22) a direct or indirect communication connection is established with the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) of the devices (B₁, B₂, B₃, S₁, S₂, S₃, S₄, S₅) of the device list (21, 22) and
wherein the data obtained from the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) of the devices (B₁, B₂, B₃, S₁, S₂, S₃, S₄, S₅) of the device list (21, 22) are in each case stored in a specific, shared storage location (41, 42),
wherein based on the device lists (21, 22) it is decided in which specific, shared storage location (41, 42) the respective data of the sensors (B₁S₁, B₁S₂, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) are stored, and
wherein a working period is assigned to the device list (21, 22) of a construction site (11, 12).

2. Method according to claim 1,
**characterized in that**
the assignment of the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) of a device (B₁, B₂, B₃, S₁, S₂, S₃, S₄, S₅) to the device list (21, 22) is carried out by means of positional information, in particular in an automated manner.

3. Method according to claim 1 or 2,
**characterized in that**
a clear assignment between sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) of a device (B₁, B₂, B₃, S₁, S₂, S₃, S₄, S₅) and a construction site (11, 12) takes place by means of the device list (21, 22).

4. Method according to any one of claims 1 to 3,
**characterized in that**
data of the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) of the devices (B₁, B₂, B₃, S₁, S₂, S₃, S₄, S₅) of the device list (21, 22) are queried by the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) and/or a database, in which these data are present.

5. Method according to any one of claims 1 to 4,
**characterized in that**
the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) of the devices (B₁, B₂, B₃, S₁, S₂, S₃, S₄, S₅) of the device list (21, 22) transmit their data to a computing unit which assigns the data of the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) of the devices (B₁, B₂, B₃, S₁, S₂, S₃, S₄, S₅) to the device list (21, 22).

6. Method according to any one of claims 1 to 5,
**characterized in that**
as devices (B₁, B₂, B₃, S₁, S₂, S₃, S₄, S₅) construction devices (B₁, B₂, B₃) are used.

7. Method according to any one of claims 1 to 6,
**characterized in that**
as devices (B₁, B₂, B₃, S₁, S₂, S₃, S₄, S₅) sensor means (S₁, S₂, S₃, S₄, S₅) are used.

8. Method according to any one of claims 1 to 7,
**characterized in that**
by means of deleting a device list (21, 22) and/or the specific, shared storage location (41, 42) the data relating to a construction site (11, 12) are deleted.

9. System for monitoring several construction sites (11, 12) having several devices (B₁, B₂, B₃, S₁, S₂, S₃, S₄, S₅) in each case which are used on the several construction sites (11, 12),
wherein on each device (B₁, B₂, B₃, S₁, S₂, S₃, S₄, S₅) at least one sensor (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) is provided in each case,
having an evaluation means (20), in which a device list (21, 22) is set up for each construction site (11, 12) to be monitored,
wherein the several devices (B₁, B₂, B₃, S₁, S₂, S₃, S₄, S₅) that are used on the respective construction site (11, 12) to be monitored are assigned in the device list (21, 22) of the construction site (11, 12) so that several device lists (21, 22) are set up simultaneously for several construction sites (11, 12),
wherein the device lists (21, 22) are created before the beginning of the construction works,
wherein in the device list (21, 22) assignment is made for each device (B₁, B₂, B₃, S₁, S₂, S₃, S₄, S₅) as to which of the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) present on the device (B₁, B₂, B₃, S₁, S₂, S₃, S₄, S₅) are assigned to the device list (21, 22),
wherein not every sensor (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) provided on a device (B₁, B₂, B₃, S₁, S₂, S₃, S₄, S₅) of the device list (21, 22) is assigned to the device list (21, 22), wherein sensors (B1S1, B1S2, B1S3, B2S1, B2S2, B2S3, B3S1, B3S2, B3S3, S1S1, S1S2, S2S1, S2S2, S3S1, S4S1, S4S2, S4S3, S5S1, S5S2) provided on a device (B1, B2, B3, S1, S2, S3, S4, S4) of the device list (21, 22), which are not relevant for monitoring the construction site, are not assigned to the device list (21, 22),
wherein the evaluation means (20) establishes a direct or indirect communication connection with the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) of the devices (B₁, B₂, B₃, S₁, S₂, S₃, S₄, S₅) of the device list (21, 22) to obtain data from the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) and
wherein the evaluation means (20) stores the data obtained from the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) of the devices (B₁, B₂, B₃, S₁, S₂, S₃, S₄, S₅) of the device list (21, 22) in each case in a specific, shared storage location (41, 42),
wherein based on the device lists (21, 22) the evaluation means (20) decides in which specific, shared storage location (41, 42) the respective data of the sensors (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) are stored, and
wherein a work period is assigned to the equipment list (21, 22) of a construction site (11, 12).

## Revendications

1. Procédé de surveillance de plusieurs chantiers (11, 12),
dans lequel plusieurs appareils (B₁, B₂, B₃, S₁, S₂, S₃, S₄, S₄) sont utilisés sur chaque chantier (11, 12),
dans lequel respectivement au moins un capteur (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) est prévu sur chaque appareil (B₁, B₂, B₃, S₁, S₂, S₃, S₄, S₄),
dans lequel une liste d'appareils (21, 22) est créée par chantier (11, 12) à surveiller si bien que plusieurs listes d'appareils (21, 22) sont créées simultanément pour plusieurs chantiers (11, 12),
dans lequel les listes de chantiers (21, 22) sont créées avant le début des travaux de construction,
dans lequel sont associés à la liste d'appareils (21, 22) du chantier (11, 12) les plusieurs appareils (B₁, B₂, B₃, S₁, S₂, S₃, S₄, S₄), lesquels sont utilisés sur le chantier (11, 12) respectif à surveiller,
dans lequel sont associées, par appareil (B₁, B₂, B₃, S₁, S₂, S₃, S₄, S₄), à la liste d'appareils (21, 22), les capteurs des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) prévus sur l'appareil, qui sont associés à la liste d'appareils (21, 22),
dans lequel n'est pas associé à la liste d'appareils (21, 22) chaque capteur (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂), qui est prévu sur un appareil (B₁, B₂, B₃, S₁, S₂, S₃, S₄, S₄) de la liste d'appareils (21, 22), dans lequel des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂), qui sont prévus sur un appareil (B₁, B₂, B₃, S₁, S₂, S₃, S₄, S₄) de la liste d'appareils (21, 22), qui ne sont pas importants pour la surveillance du chantier, ne sont pas associés à la liste d'appareils (21, 22),
dans lequel est établie, pour obtenir les données des capteurs des appareils (B₁, B₂, B₃, S₁, S₂, S₃, S₄, S₄) de la liste d'appareils (21, 22), une liaison de communication directe ou indirecte avec les capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) des appareils (B₁, B₂, B₃, S₁, S₂, S₃, S₄, S₄) de la liste d'appareils (21, 22), et
dans lequel les données obtenues des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) des appareils (B₁, B₂, B₃, S₁, S₂, S₃, S₄, S₄) de la liste d'appareils (21, 22) sont déposées respectivement dans un emplacement de stockage (41, 42) commun spécifique,
dans lequel est décidé à l'aide des listes d'appareils (21, 22) l'emplacement de stockage (41, 42) commun spécifique, dans lequel les données correspondantes des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) sont sauvegardées, et
dans lequel un moment de travail est associé à la liste d'appareils (21, 22) d'un chantier (11, 12).

2. Procédé selon la revendication 1,
**caractérisé en ce**
**que** l'association des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) d'un appareil (B₁, B₂, B₃, S₁, S₂, S₃, S₄, S₄) à la liste d'appareils (21, 22) est mise en oeuvre, en particulier de manière automatisée, au moyen d'informations de position.

3. Procédé selon la revendication 1 ou 2,
**caractérisé en ce**
**qu'**une association claire entre des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) d'un appareil (B₁, B₂, B₃, S₁, S₂, S₃, S₄, S₄) et un chantier (11, 12) est effectuée au moyen de la liste d'appareils (21, 22).

4. Procédé selon l'une quelconque des revendications 1 à 3,
**caractérisé en ce**
**que** des données des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) des appareils (B₁, B₂, B₃, S₁, S₂, S₃, S₄, S₄) de la liste d'appareils (21, 22) sont consultées par les capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) et/ou une base de données, dans laquelle ces données sont présentes.

5. Procédé selon l'une quelconque des revendications 1 à 4,
**caractérisé en ce**
**que** les capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) des appareils (B₁, B₂, B₃, S₁, S₂, S₃, S₄, S₄) de la liste d'appareils (21, 22) envoient leurs données à une unité de calcul, laquelle associe les données des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) des appareils (B₁, B₂, B₃, S₁, S₂, S₃, S₄, S₄) à la liste d'appareils (21, 22).

6. Procédé selon l'une quelconque des revendications 1 à 5,
**caractérisé en ce**
**que** des appareils de construction (B₁, B₂, B₃) sont utilisés en tant qu'appareils (B₁, B₂, B₃, S₁, S₂, S₃, S₄, S₄).

7. Procédé selon l'une quelconque des revendications 1 à 6,
**caractérisé en ce**
**que** des dispositifs de capteur (S₁, S₂, S₃, S₄, S₅) sont utilisés en tant qu'appareils (B₁, B₂, B₃, S₁, S₂, S₃, S₄, S₄).

8. Procédé selon l'une quelconque des revendications 1 à 7,
**caractérisé en ce**
**que** les données concernant un chantier (11, 12) sont supprimées au moyen de la suppression d'une liste d'appareils (21, 22) et/ou de l'emplacement de stockage (41, 42) commun spécifique.

9. Système de surveillance de plusieurs chantiers (11, 12) avec respectivement plusieurs appareils (B₁, B₂, B₃, S₁, S₂, S₃, S₄, S₄), lesquels sont utilisés sur plusieurs des chantiers (11, 12),
dans lequel respectivement au moins un capteur (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) est prévu sur chaque appareil (B₁, B₂, B₃, S₁, S₂, S₃, S₄, S₄),
avec un dispositive d'évaluation (20), dans lequel une liste d'appareils (21, 22) est mise au point par chantier (11, 12) à surveiller,
dans lequel sont associés, dans la liste d'appareils (21, 22), au chantier (11, 12), les plusieurs appareils (B₁, B₂, B₃, S₁, S₂, S₃, S₄, S₄), lesquels sont utilisés sur le chantier (11, 12) respectif à surveiller si bien que plusieurs listes d'appareils (21, 22) sont mises au point simultanément pour plusieurs chantiers (11, 12),
dans lequel les listes d'appareils (21, 22) sont créées avant le début des travaux de construction,
dans lequel sont associés, dans la liste d'appareils (21, 22), par appareil (B₁, B₂, B₃, S₁, S₂, S₃, S₄, S₄), les capteurs des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) présents sur l'appareil (B₁, B₂, B₃, S₁, S₂, S₃, S₄, S₄), qui sont associés à la liste d'appareils (21, 22),
dans lequel chaque capteur (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂), qui est prévu sur un appareil (B₁, B₂, B₃, S₁, S₂, S₃, S₄, S₄) de la liste d'appareils (21, 22), n'est pas associé à la liste d'appareils (21, 22), dans lequel des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂), qui sont prévus sur un appareil (B₁, B₂, B₃, S₁, S₂, S₃, S₄, S₄) de la liste d'appareils (21, 22), qui ne sont pas importants pour la surveillance du chantier, ne sont pas associés à la liste d'appareils (21, 22),
dans lequel le dispositif d'évaluation (20) établit une liaison de communication directe ou indirecte avec les capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) des appareils (B₁, B₂, B₃, S₁, S₂, S₃, S₄, S₄) de la liste d'appareils (21, 22) pour recevoir des données des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂), et
dans lequel le dispositif d'évaluation (20) dépose les données obtenues des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) des appareils (B₁, B₂, B₃, S₁, S₂, S₃, S₄, S₄) de la liste d'appareils (21, 22) dans respectivement un emplacement de stockage (41, 42) commun spécifique,
dans lequel le dispositif d'évaluation (20) décide à l'aide des listes d'appareils (21, 22) l'emplacement de stockage (41, 42) commun spécifique, dans lequel les données correspondantes des capteurs (B₁S₁, B₁S₂, B₁S₃, B₂S₁, B₂S₂, B₂S₃, B₃S₁, B₃S₂, B₃S₃, S₁S₁, S₁S₂, S₂S₁, S₂S₂, S₃S₁, S₄S₁, S₄S₂, S₄S₃, S₅S₁, S₅S₂) sont sauvegardées, et
dans lequel un moment de travail est associé à la liste d'appareils (21, 22) d'un chantier (11, 12).
